# EUROPEAN PATENT SPECIFICATION

(11) **EP 4 285 588 B1**
(45) Date of publication and mention of the grant of the patent: **18.12.2024**
(21) Application number: 22703821.3
(22) Date of filing: 27.01.2022
(51) Int. Cl.: H04N 9/31, G02B 27/46, G03H 1/22

(54) **PROJECTION SYSTEM AND METHOD WITH PIXEL SHIFTING**
PROJEKTIONSSYSTEM UND VERFAHREN MIT PIXELVERSCHIEBUNG
SYSTÈME ET PROCÉDÉ DE PROJECTION AVEC DÉCALAGE DE PIXEL

(30) Priority: 29.01.2021 EP 21154272; 29.01.2021 US 202163143149 P
(43) Date of publication of application: 06.12.2023
(73) Proprietor: Dolby Laboratories Licensing Corporation, San Francisco, CA 94103 (US)
(72) Inventor: PERTIERRA, Juan Pablo, San Francisco, California 94103 (US); RICHARDS, Martin J., Gig Harbor, Washington 98335 (US)
(74) Representative: Dolby International AB Patent Group Europe
(86) International application number: PCT/US2022/014153
(87) International publication number: WO 2022/165073

(56) References cited:
- WO-A1-2019/195182
- US-A1- 2006 082 562
- US-A1- 2008 088 800

## Description

### CROSS-REFERENCE TO RELATED APPLICATIONS

This application claims priority to U.S. Provisional Application No. 63/143,149 and European Patent Application No. 21154272.5, both filed on January 29, 2021.

### BACKGROUND

### 1. Field of the Disclosure

This application relates generally to projection systems and projection methods.

### 2. Description of Related Art

Digital projection systems typically utilize a light source and an optical system to project an image onto a surface or screen. The optical system may include components such as mirrors, lenses, waveguides, optical fibers, beam splitters, diffusers, spatial light modulators (SLMs), and the like. The contrast of a projector indicates the brightest output of the projector relative to the darkest output of the projector. Contrast ratio is a quantifiable measure of contrast, defined as a ratio of the luminance of the projector's brightest output to the luminance of the projector's darkest output. This definition of contrast ratio is also referred to as "static," "native," or "sequential" contrast ratio.

Some projection systems are based on SLMs that implement a spatial amplitude modulation, such as a digital micromirror device (DMD) chip. A DMD may utilize a two-dimensional array of mirrors which can be controlled to create an image. If one desires to project an image with a higher resolution than that of the DMD (*e.g.,* an image having a greater number of pixels than the number of mirrors in the DMD), pixel-shifting techniques may be used. In one comparative example of a pixel-shifting technique, sometimes called "wobulation," the system may be controlled to effectively shift the modulator by fractional pixels in a set pattern to create the appearance of displaying additional pixels. US2006082562A1 discloses a known pixelated color management device in a digital display system, having a wobulation control circuit which shifts individually defined pixels of the spatial light modulator from one array of pixel locations to another array of locations on the viewing surface.

### BRIEF SUMMARY OF THE DISCLOSURE

The invention is set out in the appended set of claims.

In this manner, various aspects of the present disclosure provide for the display of images having a high dynamic range, high contrast ratio, and high resolution, and effect improvements in at least the technical fields of image projection, holography, signal processing, and the like.

### DESCRIPTION OF THE DRAWINGS

These and other more detailed and specific features of various embodiments are more fully disclosed in the following description, reference being had to the accompanying drawings, in which:
FIGS. 1A-1B illustrate views of an exemplary spatial light modulator according to various aspects of the present disclosure;
FIG. 2 illustrates an exemplary pixel-shift operation according to various aspects of the present disclosure;
FIG. 3 illustrates a block diagram of an exemplary projection system according to various aspects of the present disclosure;
FIG. 4 illustrates an exemplary projection optical system according to various aspects of the present disclosure;
FIG. 5 illustrates an exemplary illumination diffraction pattern according to a comparative example;
FIG. 6 illustrates an exemplary illumination diffraction pattern according to various aspects of the present disclosure;
FIGS. 7A-7C illustrate exemplary pixel shaping effects according to various aspects of the present disclosure;
FIG. 8 illustrates an exemplary process flow of an exemplary pixel-shift method according to various aspects of the present disclosure;
FIGS. 9A-9C illustrate exemplary projected images according to various aspects of the present disclosure; and
FIGS. 10A-10C illustrate exemplary projected images according to various aspects of the present disclosure.

### DETAILED DESCRIPTION

This disclosure and aspects thereof can be embodied in various forms, including hardware, devices, or circuits controlled by computer-implemented methods, computer program products, computer systems and networks, user interfaces, and application programming interfaces; as well as hardware-implemented methods, signal processing circuits, memory arrays, application specific integrated circuits (ASICs), field programmable gate arrays (FPGAs), and the like. The foregoing summary is intended solely to give a general idea of various aspects of the present disclosure, and does not limit the scope of the disclosure in any way.

In the following description, numerous details are set forth, such as optical device configurations, timings, operations, and the like, in order to provide an understanding of one or more aspects of the present disclosure. It will be readily apparent to one skilled in the art that these specific details are merely exemplary and not intended to limit the scope of this application.

Moreover, while the present disclosure focuses mainly on examples in which the various circuits are used in digital projection systems, it will be understood that this is merely one example of an implementation. It will further be understood that the disclosed systems and methods can be used in any device in which there is a need to project light; for example, cinema, consumer and other commercial projection systems, heads-up displays, virtual reality displays, and the like.

### Pixel Shifting

The optics of an SLM-based projection system may be broadly categorized into two parts: the optics located on the illumination side *(i.e.,* optically upstream of the SLM) and the optics located on the projection side *(i.e.,* optically downstream of the SLM). The SLM itself includes a plurality of modulating elements arranged in, for example, a two-dimensional array. Individual modulating elements receive light from the illumination optics and convey light to the projection optics. In some examples, the SLM may be implemented as a DMD; this will be discussed in more detail below. Generally, however, a DMD includes a two-dimensional array of reflective elements (micromirrors or simply "mirrors") which selectively reflect light towards the projection optics or discard light based on the position of the individual reflective elements.

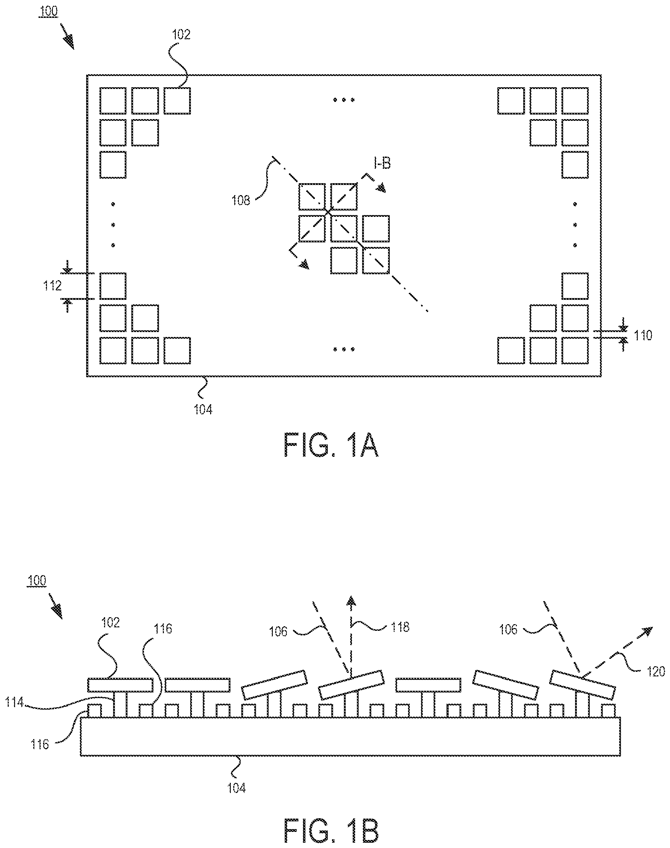

FIGS. 1A-1B illustrate various views of an exemplary DMD 100 according to various aspects of the present disclosure. In particular, FIG. 1A illustrates a plan view of the DMD 100 and FIG. 1B illustrates a partial cross-sectional view of the DMD 100 taken along line I-B illustrated in FIG. 1A. The DMD 100 includes a plurality of square micromirrors 202 arranged in a two-dimensional rectangular array on a substrate 104. In some examples, the DMD 100 may be a digital light processor (DLP) device. Each micromirror 102 may correspond to one pixel of the eventual projection image, and may be configured to tilt about a rotation axis 108, shown for one particular subset of the micromirrors 102, by electrostatic or other actuation. The individual micromirrors 102 have a width 112 and are arranged with gaps of width 110 therebetween. The micromirrors 102 may be formed of or coated with any highly reflective material, such as aluminum or silver, to thereby specularly reflect light. The gaps between the micromirrors 102 may be absorptive, such that input light which enters a gap is absorbed by the substrate 104.

While FIG. 1A expressly shows only some representative micromirrors 102, in practice the DMD 100 may include many more individual micromirrors. The resolution of the DMD 100 refers to the number of micromirrors in the horizontal and vertical directions. In some examples, the resolution may be 2K (2048×1080), 4K (4096×2160), 1080p (1920×1080), consumer 4K (3840×2160), and the like. Moreover, in some examples the micromirrors 102 may be rectangular and arranged in the rectangular array; hexagonal and arranged in a hexagonal array, and the like. Moreover, while FIG. 1A illustrates the rotation axis 108 extending in an oblique direction, in some implementations the rotation axis 108 may extend vertically or horizontally.

As can be seen in FIG. 1B, each micromirror 102 may be connected to the substrate 104 by a yoke 114, which is rotatably connected to the micromirror 102. The substrate 104 includes a plurality of electrodes 116. While only two electrodes 116 per micromirror 102 are visible in the cross-sectional view of FIG. 1B, each micromirror 102 may in practice include additional electrodes. While not particularly illustrated in FIG. 1B, the DMD 100 may further include spacer layers, support layers, hinge components to control the height or orientation of the micromirror 102, and the like. The substrate 204 may include electronic circuitry associated with the DMD 100, such as CMOS transistors, memory elements, and the like.

Depending on the particular operation and control of the electrodes 116, the individual micromirrors 102 may be switched between an "on" position, an "off' position, and an unactuated or neutral position. If a micromirror 102 is in the on position, it is actuated to an angle of, *e.g.,* -12° (that is, rotated counterclockwise by 12° relative to the neutral position) to specularly reflect input light 106 into on-state light 118. If a micromirror 102 is in the off position, it is actuated to an angle of, *e.g.,* +12° (that is, rotated clockwise by 12° relative to the neutral position) to specularly reflect the input light 106 into off-state light 120. The off-state light 120 may be directed toward a light dump that absorbs the off-state light 120. In some instances, a micromirror 102 may be unactuated and lie parallel to the substrate 104. The particular angles illustrated in FIGS. 1A-1B and described here are merely exemplary and not limiting. In some implementations, the on- and off-position angles may be between ±12 and ±13 degrees (inclusive), respectively.

In some implementations, the resolution of the DMD 100 may be lower than the desired resolution of the projected image. For example, one may desire to project an image having a 4K resolution, but DMDs having a 4K resolution may have limited or no commercial availability, prohibitive costs, and so on. In such implementations, it may be possible to control the relatively-low-resolution DMD 100 to effectively display additional pixels in the projected image. For example, a 2K mirror array may be controlled to display a 4K projected image, or a 1080p mirror array may be controlled to display a consumer 4K projected image. Pixel-shift techniques may be used to effect this control.

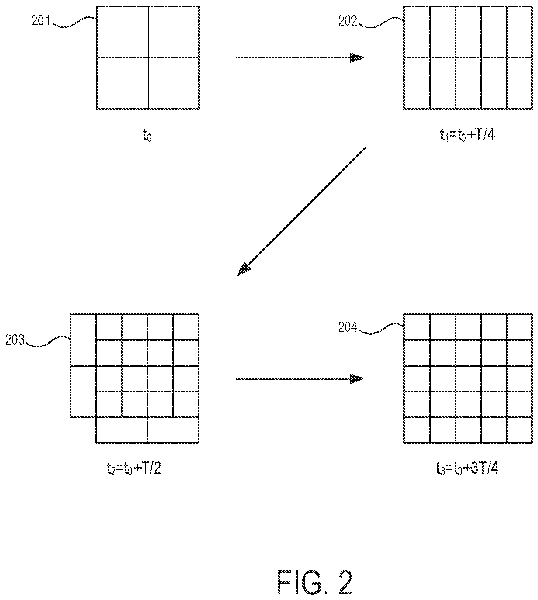

One exemplary pixel-shift technique (wobulation) uses some method (e.g., an optical method) to effectively shift the DMD 100 by fractional pixels in a set pattern to display additional pixels. One example of such a pixel-shift technique is illustrated in FIG. 2. In the pixel-shift technique of FIG. 2, a frame display period T (generally one divided by the projector frame rate) into four sub-periods each having a duration of T/4. At a time t₀ corresponding to the start of the first sub-period and thus the start of the frame display period T, an image is projected onto the screen. In FIG. 2, only a 2×2 subset of the pixels in the first resulting image 201 are shown; however, the first resulting image 201 in practice has a resolution corresponding to the relatively-lower resolution of the DMD 100. At a time t₁ corresponding to the start of the second sub-period, the image is shifted a half-pixel to the right, thus generating the second resulting image 202 on the screen. At a time t₂ corresponding to the start of the third sub-period, the image is shifted a half-pixel down, thus generating the third resulting image 203 on the screen. At a time t₃ corresponding to the start of the fourth sub-period, the image is shifted a half-pixel left, thus generating the fourth resulting image 204 on the screen. At the end of the frame display period T, the image may be shifted a half-pixel up, thus corresponding to the original position to begin display of the next frame. As can be seen from FIG. 2, each shift increases the effective display resolution. The direction of shifting is not limited to the column and row directions of the pixel array (*i.e.,* up, down, left, and right), but may instead be in an oblique direction (e.g., diagonal). Moreover, while FIG. 2 shows a pixel-shifting technique which shifts the image in two dimensions, in certain implementations pixel-shifting may only occur in one dimension in a back-and-forth manner.

This pixel-shift technique, taken alone, may not be sufficient to properly reproduce the desired high-resolution images. For example, the pixels at the lower resolution are four times as large as would be used to display a true image at the higher resolution. Thus, while this technique, taken alone, allows for the display of more pixel data, the overlap prevents a complete reproduction of high-resolution images. In the most extreme example, where the image for display is a full-resolution black/white checkerboard pattern, the above technique, taken alone, will display a flat gray field instead of a checkerboard due to the overlap between every adjacent white and black pixel in the checkerboard. To counteract the effects of the overlap, the design of various physical components of the projector system itself may be modified.

### Projector Systems

Some projection systems are based on SLMs that implement a spatial amplitude modulation. In such a system, the light source may provide a light field that embodies the brightest level that can be reproduced on the image, and light is attenuated or discarded in order to create the desired scene levels. Some high contrast examples of projection systems based on this architecture use a semi-collimated illumination system and Fourier stop in the projection optics to improve contrast. An example of a projector or other display system including or relating to a Fourier plane and aperture have been described in commonly-owned patents and patent applications, including WIPO Pub. No. 2019/195182, titled "Systems and Methods for Digital Laser Projection with Increased Contrast Using Fourier Filter."

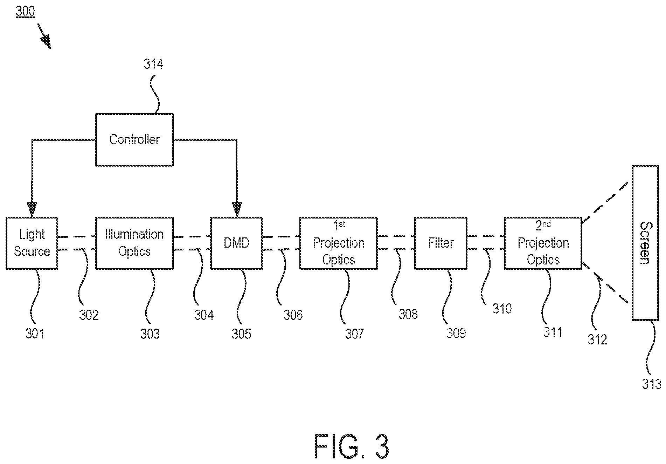

FIG. 3 illustrates an exemplary high contrast projection system 300 according to various aspects of the present disclosure. In particular, FIG. 3 illustrates a projection system 300 which includes a light source 301 configured to emit a first light 302; illumination optics 303 configured to receive the first light 302 and redirect or otherwise modify it, thereby to generate a second light 304; a DMD 305 configured to receive the second light 304 and selectively redirect and/or modulate it as a third light 306; first projection optics 307 configured to receive the third light 306 and redirect or otherwise modify it, thereby to generate a fourth light 308; a filter 309 configured to filter the fourth light 308, thereby to generate a fifth light 310; and second projection optics 311 configured to receive the fifth light 311 and project it as a sixth light 312 onto a screen 313. The DMD 305 may be the same as or similar to the DMD 200 illustrated in FIGS. 2A-2B. The first projection optics 307 may include at least one lens configured to spatially Fourier transform the third light 306 onto a plane (also referred to as the Fourier plane). The filter 309 may be a Fourier aperture (also referred to as a Fourier filter); that is, an aperture located at or near the plane at which a Fourier transform of an object is formed. Micromirrors and gaps of DMD 305 may cooperate to form a two-dimensional grating that diffracts input light. Therefore, modulated light propagating away from DMD 305 may form a plurality of diffraction orders observable as a Fraunhofer diffraction pattern in a far-field region of DMD 305 or at a focal plane of a lens. Each diffraction order corresponds to one light beam propagating away from DMD 305 in a unique respective direction. By design, most of the optical power of modulated light from DMD 305 may be in the zeroth diffraction order.

While FIG. 3 illustrates the first projection optics 307, the filter 309, and the second projection optics 311 as separate entities, in some implementations the filter 309 may be incorporated as part of a larger optical system including the first projection optics 307 and the second projection optics 311. Various elements of the projection system 300 may be operated by or under the control of a controller 314; for example, one or more processors such as a central processing unit (CPU) of the projection system 300. As illustrated in FIG. 3, the light source 301 and the DMD 305 are controlled by the controller 314. In some implementations, the controller 314 may additionally or alternatively control other components of the projection system 300, including but not limited to the illumination optics 303, the first projection optics 307, and/or the second projection optics 311. In one particular example, the controller 314 may control components of the illumination optics 303 to ensure the second light 304 is incident on the DMD 205 at the appropriate location and/or angle.

In 3D or 3D-capable projection implementations, a physical projector may include two projection systems 300 disposed side-by-side, with each individual projection system 300 projecting an image corresponding to one eye of the viewer. Alternatively, a physical projector may utilize one combined projection system 300 to project individual images corresponding to both eyes of the viewer.

In practical implementations, the projection system 300 may include fewer optical components or may include additional optical components such as mirrors, lenses, waveguides, optical fibers, beam splitters, diffusers, and the like. With the exception of the screen 313, the components illustrated in FIG. 3 may be integrated into a housing to provide a projection device. Such a projection device may include additional components such as a memory, input/output ports, communication circuitry, a power supply, and the like.

The light source 301 may be, for example, a laser light source, an LED, and the like. Generally, the light source 301 is any light emitter which emits coherent light. In some aspects of the present disclosure, the light source 301 may comprise multiple individual light emitters, each corresponding to a different wavelength or wavelength band. The light source 301 emits light in response to an image signal provided by the controller 314. The image signal includes image data corresponding to a plurality of frames to be successively displayed. The image signal may originate from an external source in a streaming or cloud-based manner, may originate from an internal memory of the projection system 300 such as a hard disk, may originate from a removable medium that is operatively connected to the projection system 300, or combinations thereof.

Although FIG. 3 illustrates a generally linear optical path, in practice the optical path is generally more complex. For example, in the projection system 300, the second light 304 from the illumination optics 303 is steered to the DMD chip 305 (or chips) at a fixed angle, determined by the steering angle of the DMD mirrors.

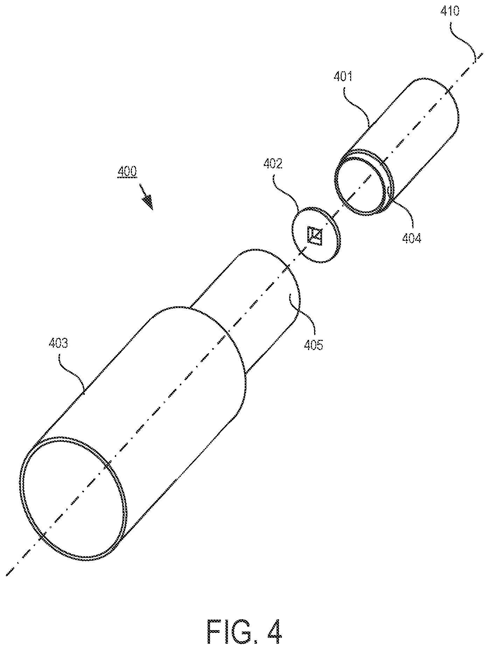

To counteract the effects of overlap caused by pixel-shifting as noted above, the design of the first projection optics 307, the filter 309, and/or the second projection optics 311 may be modified. Preferably, the configuration of the filter 309 is particularly selected to counteract such effects. To illustrate the effects on the image of the filter configuration, FIG. 4 shows an exploded view an exemplary projection lens system 400 according to various aspects of the present disclosure. The projection lens system 400 is one example of the combination of the first projection optics 307, the filter 309, and the second projection optics 311 illustrated in FIG. 3. In some aspects of the present disclosure, the performance of the complete projection lens system 400 meets Digital Cinema Initiatives (DCI) image specifications; for example, the DCI Digital Cinema System Specification (DCSS) Version 1.3 or newer.

The projection lens system 400 includes first projection optics 401 configured to form a Fourier transform of an object at an exit pupil thereof as will be described in more detail below (also referred to as a Fourier part or a Fourier lens assembly), an filter 402, and second projection optics 403 (also referred to as a zoom part or a zoom lens assembly). The first projection optics 401, the filter 402, and the second projection optics 403 may respectively correspond to the first projection optics 307, the filter 309, and the second projection optics 311 illustrated in FIG. 3 As used herein, "Fourier part" or "Fourier lens assembly" refers to an optical system that spatially Fourier transforms modulated light (e.g., light from the DMD 305) by focusing the modulated light onto a Fourier plane. The first projection optics 401 and the filter 402 collectively operate as a Fourier lens with a spatial filter that may also be used as a fixed throw projection lens. The spatial Fourier transform imposed by the first projection optics 401 converts the propagation angle of each diffraction order of the modulated light to a corresponding spatial position on the Fourier plane. The first projection optics 401 thereby enables selection of desired diffraction orders, and rejection of undesired diffraction orders, by spatial filtering at the Fourier plane. The spatial Fourier transform of the modulated light at the Fourier plane is equivalent to a Fraunhofer diffraction pattern of the modulated light. Both the first projection optics 401 and the second projection optics may include a plurality of individual lens elements.

To allow access to the Fourier aperture when setting up the projection system 400 and/or to allow the filter 402 to be interchangeable, the projection lens system 400 may have a modular design. In such instances, the first projection optics 401 may be provided with a first attachment part 404 and the second projection optics 403 may be provided with a second attachment part 405. The first attachment part 404 and the second attachment part 405 may include complementary mating fasteners such as screws, threads, pins, slots, and the like. In other implementations, the housings for the first projection optics 401 and the second projection optics 403 may be integral.

The filter 402 is configured to block a portion of light and to transmit a portion of the light (e.g., to transmit modulated light corresponding to at least one diffraction order) in the projection lens system 200. In some implementations, the diffraction order transmitted by the filter 402 may be a unitary diffraction order (*i.e.,* the entirety of the transmitted order); alternatively, the diffraction order transmitted by the filter 402 may be an aggregate diffraction order (*i.e.,* a part of one order and a complementary part from another order or orders). As illustrated in FIG. 4, the filter 402 has a square opening having sides of, for example, 6 mm in length. FIG. 4 also illustrates an optical axis 410 of the projection lens system 400. When assembled, the first projection optics 401 and the second projection optics are substantially coaxial with one another and with the optical axis 410. In some implementations (for example, depending on the illumination angle), the filter 402 is further substantially coaxial with the optical axis 410.

The projection lens system 400 may include or be associated with one or more non-optical elements, including a thermal dissipation device such as a heat sink (or cooling fins), one or more adhesives (or fasteners), and so on. In some implementations, the filter 402 may block, and thus absorb, approximately 15% or more of incident light and therefore the heat sink or cooling fins may be positioned and configured so as to appropriately dissipate heat from the filter 402. In some implementations, the filter 402 is thermally isolated from other parts of the projection lens system 400.

While FIG. 4 illustrates the opening of the filter 402 as having a square shape, the present disclosure is not so limited. In some implementations, the filter 402 may have a differently-shaped opening, such as a circle, an ellipse, a rounded square, a rectangle, a rounded rectangle, a hexagon, a rounded hexagon, a pincushion, and the like, so long as the shape is dimensioned to cover an appropriate angular passband. The appropriate angular passband may be approximately 190%-210% of a size of a (e.g., zeroth, first, second, etc.) diffraction order in the Fourier plane; for example, approximately 200%. In some implementations, the dimensions and shape of the opening of the filter 402 may be particularly selected such that, when utilized with a pixel-shifting method, the operation of the projector is enhanced. For example, because the filter 402 acts as a Fourier filter, it has an effect on which angular frequency components from the DMD are displayed on a screen. Thus, modifications to the opening of the filter 402 result in changes to the size and/or shape of the pixels displayed on the screen. In one example, the size of the pixels can effectively be reduced such that they are smaller on the screen than the projected size of the physical mirrors of the DMD. When combined with a pixel-shifting technique, this may create higher resolution images. To achieve this, the light source of the projection system (*e.g*., the light source 301 illustrated in FIG. 3) is selected to have sufficiently high coherence and low etendue to employ Fourier filtering effectively. Thus, the light sources may be laser light sources.

### Fourier-Enhanced Pixel Shifting

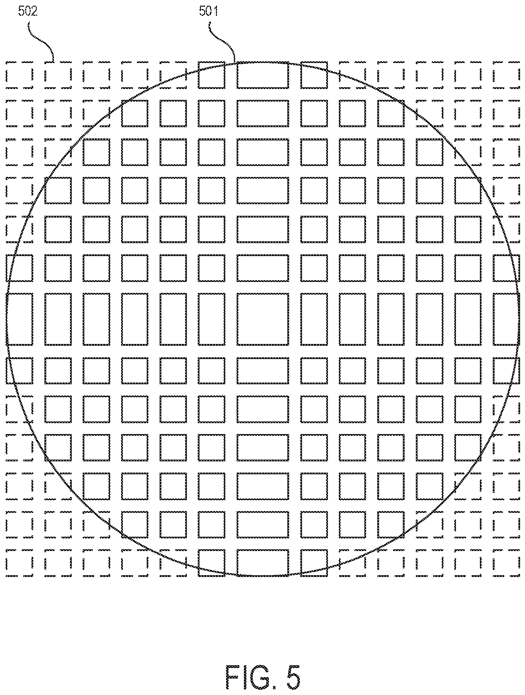

The effects of the dimensions and shape of the filter aperture are illustrated in FIGS. 5-9C. FIG. 5 illustrates the effects of pixel-shifting with no filter (or with a filter having a large aperture), assuming adequate illumination by the light source. In FIG. 5, the aperture 501 is superimposed on a plurality of diffraction orders 502. The aperture 501 may correspond to the projection lens aperture (*e.g.,* of a projection lens in the first projection optics 307 illustrated in FIG. 3) or, in the case where a Fourier filter having a large aperture is used, to the opening of the Fourier filter (*e.g.,* of the filter 309 and/or the filter 402 illustrated in FIGS. 3-4). Diffraction orders 502 which are all or mostly blocked are illustrated using dashed lines, and diffraction orders 502 which are all or mostly transmitted are illustrated using solid lines.

FIG. 5 corresponds to a particular example in which the light emitted from the light source has a wavelength of 545 nm, the illumination angle of the light incident on the DMD (*e.g*., the angle of the input light 106 illustrated in FIG. 1B, measured relative to the normal of a micromirror in the unactuated or neutral position) is 24°, the on-position angle of the mirrors of the DMD (e.g., the angle of the surface of the micromirror 102 in the on state illustrated in FIG. 1B, measured relative to the plane of the substrate 104) is 12°, the off-position angle of the mirrors of the DMD (e.g., the angle of the surface of the micromirror 102 in the off state illustrated in FIG. 1B, measured relative to the plane of the substrate 104) is -12°, the width of the mirrors of the DMD (*e.g*., the width 112 illustrated in FIG. 1A) is 10.80 µm, and the gap between the mirrors of the DMD (*e.g*., the width 114 illustrated in FIG. 1A) is 0.75 µm.

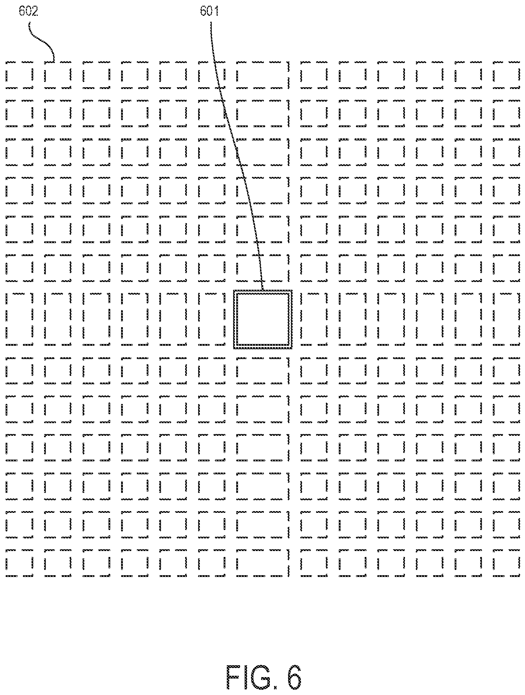

FIG. 6 illustrates the effects of pixel-shifting with a particularly-sized filter having a square aperture of a size (*e.g*., being of a diameter or height and/or width, or area) that is 200% of a size of a diffraction order (*e.g*., of a respective diameter or height and/or width, or area, of a zeroth or higher diffraction order), assuming adequate illumination by the light source. In FIG. 6, the aperture 601 is superimposed on a plurality of diffraction orders 602. The aperture 601 may correspond to the opening of the Fourier filter (*e.g*., of the filter 309 and/or the filter 402 illustrated in FIGS. 3-4). Diffraction orders 602 which are blocked are illustrated using dashed lines, and the diffraction order 602 which is transmitted is illustrated using solid lines. As shown in FIG. 6, aperture 601 passes light from a diffraction order 602 that is illustrated using solid lines and that corresponds to a zeroth diffraction order.

FIG. 6 corresponds to the same projection system parameters as FIG. 5; that is, the particular example in which the light emitted from the light source has a wavelength of 545 nm, the illumination angle of the light incident on the DMD (*e.g*., the angle of the input light 106 illustrated in FIG. 1B, measured relative to the normal of a micromirror in the unactuated or neutral position) is 24°, the on-position angle of the mirrors of the DMD (*e.g*., the angle of the surface of the micromirror 102 in the on state illustrated in FIG. 1B, measured relative to the plane of the substrate 104) is 12°, the off-position angle of the mirrors of the DMD (e.g., the angle of the surface of the micromirror 102 in the off state illustrated in FIG. 1B, measured relative to the plane of the substrate 104) is -12°, the width of the mirrors of the DMD (*e.g*., the width 112 illustrated in FIG. 1A) is 10.80 µm, and the gap between the mirrors of the DMD (*e.g.*, the width 114 illustrated in FIG. 1A) is 0.75 µm.

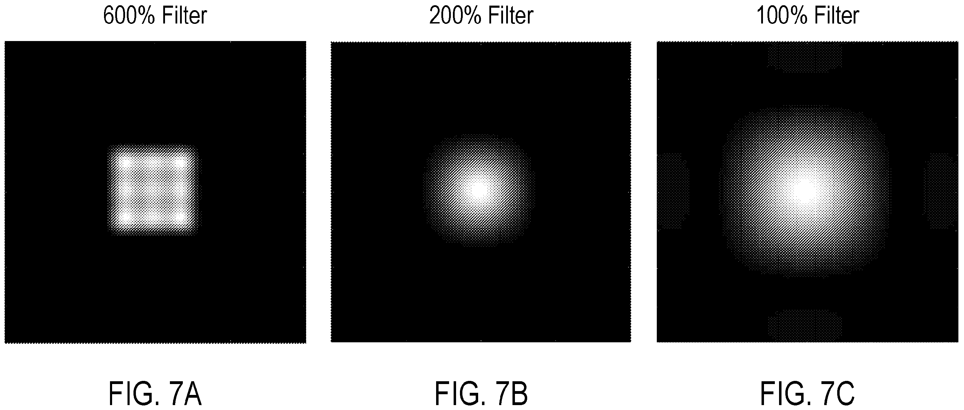

In FIG. 5, because many diffraction orders, amounting to a large portion of the DMD angular Fourier spectrum, are captured by the lens, many of the high-spatial-frequency details (*e.g*., mirror edges) are reproduced on the screen, resulting in square pixels corresponding to the size of the mirrors in the physical device. In FIG. 6, the filter corresponds to capturing the central lobe of the mirror diffraction (*i.e.,* a sinc function) cloud. Because the pass-band of the filter in FIG. 6 is reduced compared to the system in FIG. 5, high angular frequencies will not be transmitted. As the pass-band of the filter becomes smaller, sharp details such as the edges of the mirrors will be lost and, at one particular point shown in FIG. 6, only the image content frequencies will be allowed to pass. If the size of the opening of the filter is further reduced, the filter will begin to low-pass image content, which may result in image blurring on the screen. The effects of the particular size of the opening is illustrated in FIGS. 7A-7C.

Each of FIGS. 7A-7C illustrate a single pixel projected by a projection system having the same characteristics and components, except that in each illustration the size of the filter aperture is different. Moreover, each of FIGS. 7A-7C are presented on the same scale. In FIG. 7A, the filter has a square aperture that is 600% of a diffraction order in size; in FIG. 7B, the filter has a square aperture that is 200% of a diffraction order in size; and in FIG. 7C, the filter has a square aperture that is 100% of a diffraction order in size. Compared to FIG. 7A, FIG. 7B does not exhibit unwanted high-spatial-frequency details. Compared to FIG. 7C, FIG. 7B is brighter in the middle and dimmer towards the corner of the mirror. FIG. 7B illustrates the point at which the image data and nothing else passes through the filter. When combined with a pixel-shift technique, the smaller pixel of FIG. 7B has less overlap. Thus, according to the invention, in a projection system which includes a Fourier filter and utilizes a pixel-shift technique, the filter has a square filter that is approximately 190%-210% of a diffraction order in size, and most preferably has a square filter that is approximately 200% of a diffraction order in size.

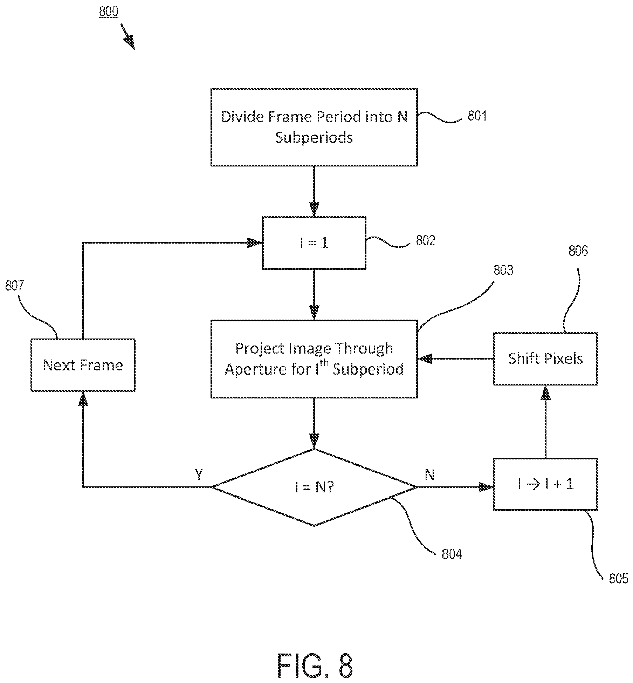

One particular implementation of a pixel-shift technique in a projection system having a Fourier filter, such as the projection system 300 illustrated in FIG. 3, is illustrated in FIG. 8. The method 800 of FIG. 8 may be performed by the controller 314 of FIG. 3, and may be implemented using hardware, software, firmware, or combinations thereof. In some examples, the method 800 is implemented as instructions stored in a non-transitory computer-readable medium, such as a hard disk or other storage medium contained in or associated with the projection system 300.

In the method 800, a series of images are displayed using image data which includes a series of frames. The image data is divided into a plurality of frame periods each corresponding to the duration T of a frame; for example, a 60 Hz display has a frame period T of (1/60) sec. At operation 801, the frame period is divided into N subperiods, with N being an integer larger than 1. Preferably, N is four to implement a pixel-shifting pattern similar to that illustrated in FIG. 2; however, in other implementations N may be six or another number other than four. At operation 802, a counter I is initialized to 1. Subsequently, at operation 803, an image is projected through the filter aperture for the I^{th} subperiod. Operation 803 may include sub-operations, such as causing a light source of the projection system to emit light, controlling the spatial light modulator (e.g., the DMD 305 of FIG. 3) to modulate the light and form the image, and so on. This image is maintained for a duration of T / N. In the example of a 60 Hz display using four subperiods per frame, this subperiod duration is (1/240) sec.

At the end of the subperiod at operation 804, the counter I is compared to N to determine if the subperiod is the last subperiod of the frame. If the counter I does not equal N, at operation 805 the counter I is incremented by 1 and at operation 806 the pixels are shifted. In the example where four subperiods are provided per frame and the pixel-shifting follows a square pattern as in FIG. 2, this corresponds to a half-pixel shift. Alternatively, four subperiods may be provided per frame and the pixel-shifting may follow a diamond or rectangle pattern; six subperiods may be provided per frame and the pixel-shifting may follow a rectangle or hexagon pattern; three subperiods may be provided per frame and the pixel-shifting may follow a triangle pattern; two subperiods may be provided per frame and the pixel-shifting may follow a linear (back-and-forth) pattern; and so on. In some implementations, the number of subperiods may be on the order of tens (or greater) and the pixel-shifting may approximate a circular pattern or a complex shape. Thereafter, operation 803 is repeated for the next subperiod until the time when the counter I is equal to N. At this point, at operation 807 the frame is incremented and the method 800 returns to operation 807. Operations 802 through 807 are repeated for the duration of image display, and may continue until the endpoint of the media content has been reached, an operation issues a pause or stop instruction, and so on.

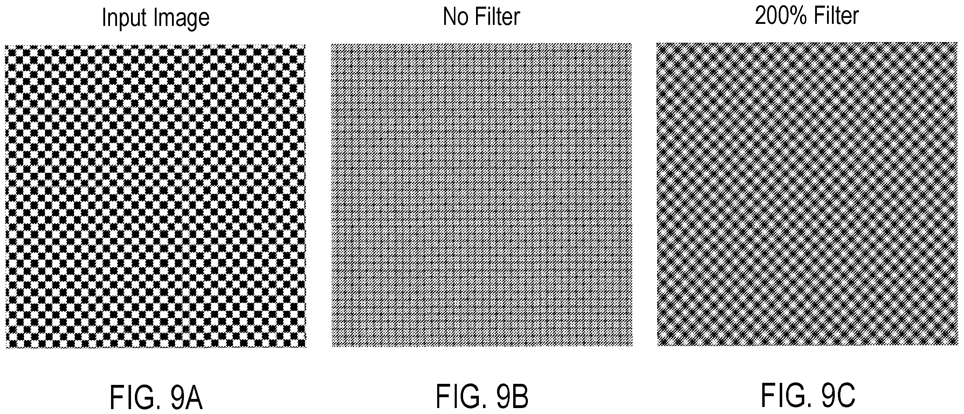

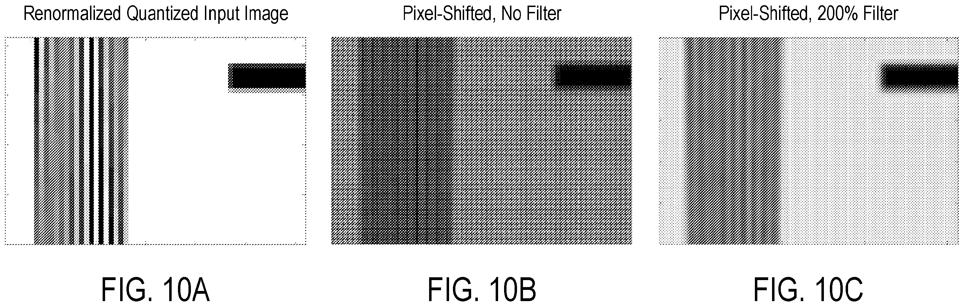

When a pixel-shifting technique is combined with the filter, the effects of the particular size of the opening are illustrated in FIGS. 9A-10C. FIGS. 9A-9C illustrate the results of a first image test using a checkerboard pattern, and FIGS. 10A-10C illustrate the results of a second image test using a resolution chart.

FIG. 9A shows the input image for the first image test, which is a full-resolution 4K checkerboard pattern shown in close-up. FIG. 9B shows the result (*i.e.,* the output image) for a projection system which implements a four-subperiod pixel-shifting technique (as shown in FIG. 2) but which does not include a Fourier aperture, such as the filter 309 of FIG. 2 or the filter 402 of FIG. 4. FIG. 9C shows the result for a projection system which implements a four-subperiod pixel-shifting technique and which includes a Fourier aperture having an opening that is 200% of the diffraction order in size. In FIG. 9B, the black squares of the checkerboard are indistinguishable from the white squares, as all squares appear to be substantially the same grayish color. In FIG. 9C, however, the squares of the checkerboard are distinguishable from one another. While the modulation amplitude is not as high as it would be if the projection system used a native full-resolution modulator, the combination of pixel-shifting and the particularly-sized aperture allows for the reproduction of high-resolution details using a lower-resolution modulator. As can be seen by comparing FIGS. 9B and 9C, the pixel-shifting technique alone, without the further implementation of the aperture, cannot reproduce such details.

FIG. 10A shows the input image for the second image test, which is a renormalized quantized resolution chart shown in close-up. FIG. 10B shows the result for a projection system which implements a four-subperiod pixel-shifting technique and which includes a Fourier aperture having an opening that is 800% of the diffraction order in size. FIG. 10C shows the result for a projection system which implements a four-subperiod pixel-shifting technique and which includes a Fourier aperture having an opening that is 200% of the diffraction order in size. In practice, the large opening used to project the image in FIG. 10B is analogous to having no filter at all, as can be seen by comparing the artifacts in FIG. 10B to similar ones in FIG. 9B. As such, the lines in the resolution pattern are not resolved in FIG. 10B. In FIG. 10C, however, the lines are resolved even in the close-up view.

### Effects

By comparing FIGS. 9C and 10C with FIGS. 9B and 10B and in view of FIGS. 7B and 7C, it can be seen that the effects of pixel-shifting and the particularly-sized aperture opening (and in particular, the ability to properly render a high-resolution image using a lower-resolution modulator) are unexpectedly greater than merely the sum of pixel-shifting alone and a Fourier aperture alone.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments incorporate more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A projection system, comprising:
a light source (301) including at least one laser configured to emit input laser light;
a spatial light modulator (305) configured to receive the input laser light and generate modulated laser light, wherein the modulated laser light comprises a plurality of diffraction orders generated by the input laser light being diffracted by the spatial light modulator;
a lens (307) configured to Fourier transform the modulated laser light and focusing the modulated laser light as Fourier-transformed by the lens onto a Fourier plane;
a filter (309) for spatially filtering in the Fourier plane the modulated laser light as Fourier-transformed by the lens, configured to transmit at least one diffraction order of the modulated laser light as Fourier-transformed by the lens and to block a remaining portion of the modulated laser light as Fourier-transformed by the lens; and
a controller (314) for controlling the spatial light modulator, configured to:
for each of a plurality of subperiods, cause the spatial light modulator to project an image through the lens and the filter, and
between each of the plurality of subperiods, cause the spatial light modulator to shift the position of an image to be projected by the spatial light modulator by a partial pixel distance,
wherein the filter is configured to transmit at least a zeroth diffraction order of the modulated laser light as Fourier-transformed by the lens, and
wherein the filter includes an aperture for passing the at least one diffraction order transmitted by the filter, wherein a size of the aperture is between 190% and 210% of a size of the zeroth diffraction order of the modulated laser light in the Fourier plane.

2. The projection system according to claim 1, wherein the size of the aperture is 200% of the size of the zeroth diffraction order of the modulated laser light in the Fourier plane.

3. The projection system according to any of claims 1 to 2, wherein a shape of the aperture is square.

4. The projection system according to any of claims 1 to 3, wherein the plurality of subperiods is four subperiods and/or wherein the partial pixel distance is equal to a half-pixel distance

5. The projection system according to any of claims 1 to 4, wherein the controller is configured to cause the spatial light modulator to:
between a first subperiod and a second subperiod, shift the position of an image to be projected by the spatial light modulator by a half-pixel distance in a first direction,
between the second subperiod and a third subperiod, shift the position of an image to be projected by the spatial light modulator by a half-pixel distance in a second direction perpendicular to the first direction,
between the third subperiod and a fourth subperiod, shift the position of an image to be projected by the spatial light modulator by a half-pixel distance in a third direction perpendicular to the second direction and opposite to the first direction, and
after the fourth subperiod, shift the position of an image to be projected by the spatial light modulator by a half-pixel distance in a fourth direction perpendicular to the third direction and opposite to the second direction.

6. The projection system according to any of claims 1 to 5, wherein the controller is configured to repeatedly cause the spatial light modulator to project an image and to shift the position of an image to be projected by the spatial light modulator by a partial pixel distance for a plurality of image frames.

7. The projection system according to any of claims 1 to 6, wherein the spatial light modulator is a digital micromirror device.

8. A projection method, comprising:
by a light source of a projection system including at least one laser, emitting input laser light;
by a spatial light modulator of the projection system, receiving the input laser light and generating modulated laser light, wherein the modulated laser light comprises a plurality of diffraction orders generated by the input laser light being diffracted by the spatial light modulator;
by a lens of the projection system, Fourier transforming the modulated laser light and focusing the modulated laser light as Fourier-transformed by the lens onto a Fourier plane;
by a filter of the projection system for spatially filtering in the Fourier plane the modulated laser light as Fourier-transformed by the lens, transmitting at least one diffraction order of the modulated laser light as Fourier-transformed by the lens and blocking a remaining portion of the modulated light as Fourier-transformed by the lens; and
by a controller of the projection system for controlling the spatial light modulator,
for each of a plurality of subperiods, causing the spatial light modulator to project an image through the lens and the filter; and
between each of the plurality of subperiods, causing the spatial light modulator to shift the position of an image to be projected by the spatial light modulator by a partial pixel distance,
wherein transmitting at least one diffraction order of the modulated laser light as Fourier-transformed by the lens includes transmitting at least a zeroth diffraction order of the modulated laser light as Fourier-transformed by the lens, and
wherein the filter includes an aperture for passing the at least one diffraction order transmitted by the filter, wherein a size of the aperture is between 190% and 210% of a size of the zeroth diffraction order of the modulated laser light in the Fourier plane.

9. The projection method according to claim 8, wherein the size of the aperture is 200% of the size of the zeroth diffraction order of the modulated laser light in the Fourier plane.

10. The projection method according to any of claims 8 to 9, wherein a shape of the aperture is square.

11. The projection method according to any of claims 8 to 10, wherein the plurality of subperiods is four subperiods, and/or wherein the partial pixel distance is equal to a half-pixel distance.

12. The projection method according to any of claims 8 to 11, wherein between each of the plurality of subperiods, causing the spatial light modulator to shift the position of an image to be projected by the spatial light modulator by a partial pixel distance includes causing the spatial light modulator to:
between a first subperiod and a second subperiod, shift the position of an image to be projected by the spatial light modulator by a half-pixel distance in a first direction,
between the second subperiod and a third subperiod, shift the position of an image to be projected by the spatial light modulator by a half-pixel distance in a second direction perpendicular to the first direction,
between the third subperiod and a fourth subperiod, shift the position of an image to be projected by the spatial light modulator by a half-pixel distance in a third direction perpendicular to the second direction and opposite to the first direction, and
after the fourth subperiod, shift the position of an image to be projected by the spatial light modulator by a half-pixel distance in a fourth direction perpendicular to the third direction and opposite to the second direction.

13. The projection method according to any of claims 8 to 12, comprising:
by the controller, repeatedly causing the spatial light modulator to project an image and to shift the position of an image to be projected by the spatial light modulator by a partial pixel distance for a plurality of image frames.

14. The projection method according to any of claims 8 to 13, wherein the spatial light modulator is a digital micromirror device.

15. A non-transitory computer-readable medium storing instructions that, when executed by an electronic processor of a projection device, cause the projection device to perform operations comprising the method of any of claims 8 to 14.

## Patentansprüche

1. Projektionssystem, umfassend:
eine Lichtquelle (301), die zumindest einen Laser beinhaltet, der konfiguriert ist, um Eingangslaserlicht auszusenden;
einen räumlichen Lichtmodulator (305), der konfiguriert ist, um das Eingangslaserlicht zu empfangen und moduliertes Laserlicht zu erzeugen, wobei das modulierte Laserlicht eine Vielzahl von Beugungsordnungen umfasst, die dadurch erzeugt werden, dass das Eingangslaserlicht durch den räumlichen Lichtmodulator gebeugt wird;
eine Linse (307), die konfiguriert ist, um das modulierte Laserlicht einer Fourier-Transformation zu unterziehen und das durch die Linse einer Fourier-Transformation unterzogene modulierte Laserlicht auf eine Fourier-Ebene zu fokussieren;
einen Filter (309) zum räumlichen Filtern des durch die Linse einer Fourier-Transformation unterzogenen modulierten Laserlichts in der Fourier-Ebene, der konfiguriert ist, um zumindest eine Beugungsordnung des durch die Linse einer Fourier-Transformation unterzogenen modulierten Laserlichts zu übertragen und einen verbleibenden Abschnitt des durch die Linse einer Fourier-Transformation unterzogenen modulierten Laserlichts zu blockieren; und
eine Steuereinheit (314) zum Steuern des räumlichen Lichtmodulators, die konfiguriert ist, um:
für jeden einer Vielzahl von Teilzeiträumen den räumlichen Lichtmodulator zu veranlassen, ein Bild durch die Linse und den Filter zu projizieren, und
zwischen jedem der Vielzahl von Teilzeiträumen den räumlichen Lichtmodulator zu veranlassen, die Position eines von dem räumlichen Lichtmodulator zu projizierenden Bildes um eine Teilpixeldistanz zu verschieben,
wobei der Filter konfiguriert ist, um zumindest eine nullte Beugungsordnung des durch die Linse einer Fourier-Transformation unterzogenen modulierten Laserlichts zu übertragen, und
wobei der Filter eine Blende zum Durchlassen der zumindest einen von dem Filter übertragenen Beugungsordnung beinhaltet, wobei eine Größe der Blende zwischen 190% und 210% einer Größe der nullten Beugungsordnung des modulierten Laserlichts in der Fourier-Ebene beträgt.

2. Projektionssystem nach Anspruch 1, wobei die Größe der Blende 200% der Größe der nullten Beugungsordnung des modulierten Laserlichts in der Fourier-Ebene beträgt.

3. Projektionssystem nach einem der Ansprüche 1 bis 2, wobei eine Form der Blende quadratisch ist.

4. Projektionssystem nach einem der Ansprüche 1 bis 3, wobei die Vielzahl von Teilzeiträumen vier Teilzeiträume beträgt und/oder wobei die Teilpixeldistanz gleich einer Halbpixeldistanz ist

5. Projektionssystem nach einem der Ansprüche 1 bis 4, wobei die Steuereinheit konfiguriert ist, um den räumlichen Lichtmodulator zu veranlassen:
zwischen einem ersten Teilzeitraum und einem zweiten Teilzeitraum die Position eines von dem räumlichen Lichtmodulator zu projizierenden Bildes um eine Halbpixeldistanz in eine erste Richtung zu verschieben,
zwischen dem zweiten Teilzeitraum und einem dritten Teilzeitraum die Position eines von dem räumlichen Lichtmodulator zu projizierenden Bildes um eine Halbpixeldistanz in eine zweite Richtung senkrecht zu der ersten Richtung zu verschieben,
zwischen dem dritten Teilzeitraum und einem vierten Teilzeitraum die Position eines von dem räumlichen Lichtmodulator zu projizierenden Bildes um eine Halbpixeldistanz in eine dritte Richtung senkrecht zu der zweiten Richtung und der ersten Richtung entgegengesetzt zu verschieben,
nach dem vierten Teilzeitraum die Position eines von dem räumlichen Lichtmodulator zu projizierenden Bildes um eine Halbpixeldistanz in eine vierte Richtung senkrecht zu der dritten Richtung und der zweiten Richtung entgegengesetzt zu verschieben.

6. Projektionssystem nach einem der Ansprüche 1 bis 5, wobei die Steuereinheit konfiguriert ist, um den räumlichen Lichtmodulator wiederholt dazu zu veranlassen, ein Bild zu projizieren und die Position eines durch den räumlichen Lichtmodulator zu projizierenden Bildes für eine Vielzahl von Einzelbildern um eine Teilpixeldistanz zu verschieben.

7. Projektionssystem nach einem der Ansprüche 1 bis 6, wobei der räumliche Lichtmodulator eine digitale Mikrospiegelvorrichtung ist.

8. Projektionsverfahren, umfassend:
durch eine Lichtquelle eines Projektionssystems, das zumindest einen Laser beinhaltet, Aussenden von Eingangslaserlicht;
durch einen räumlichen Lichtmodulator des Projektionssystems Empfangen des Eingangslaserlichts und Erzeugen von moduliertem Laserlicht, wobei das modulierte Laserlicht eine Vielzahl von Beugungsordnungen umfasst, die dadurch erzeugt werden, dass das Eingangslaserlicht durch den räumlichen Lichtmodulator gebeugt wird;
durch eine Linse des Projektionssystems Unterziehen des modulierte Laserlichts einer Fourier-Transformation und Fokussieren des einer Fourier-Transformation unterzogenen modulierten Laserlichts durch die auf eine Fourier-Ebene;
durch einen Filter des Projektionssystems zum räumlichen Filtern des durch die Linse einer Fourier-Transformation unterzogenen modulierten Laserlichts in der Fourier-Ebene, Übertragen des durch die Linse einer Fourier-Transformation unterzogenen modulierten Laserlichts und Blockieren eines verbleibenden Abschnitts des durch die Linse einer Fourier-Transformation unterzogenen modulierten Laserlichts; und
durch eine Steuereinheit des Projektionssystems zum Steuern des räumlichen Lichtmodulators,
für jeden einer Vielzahl von Teilzeiträumen Veranlassen des räumlichen Lichtmodulators, ein Bild durch die Linse und den Filter zu projizieren; und
zwischen jedem der Vielzahl von Teilzeiträumen Veranlassen des räumlichen Lichtmodulators, die Position eines von dem räumlichen Lichtmodulator zu projizierenden Bildes um eine Teilpixeldistanz zu verschieben,
wobei Übertragen von zumindest einer Beugungsordnung des modulierten Laserlichts, wie es durch die Linse einer Fourier-Transformation unterzogen wurde, Übertragen von zumindest einer nullten Beugungsordnung des modulierten Laserlichts, wie es durch die Linse einer Fourier-Transformation unterzogen wurde, beinhaltet, und
wobei der Filter eine Blende zum Durchlassen der zumindest einen von dem Filter übertragenen Beugungsordnung beinhaltet, wobei eine Größe der Blende zwischen 190% und 210% einer Größe der nullten Beugungsordnung des modulierten Laserlichts in der Fourier-Ebene beträgt.

9. Projektionsverfahren nach Anspruch 8, wobei die Größe der Blende 200% der Größe der nullten Beugungsordnung des modulierten Laserlichts in der Fourier-Ebene beträgt.

10. Projektionsverfahren nach einem der Ansprüche 8 bis 9, wobei eine Form der Blende quadratisch ist.

11. Projektionsverfahren nach einem der Ansprüche 8 bis 10, wobei die Vielzahl von Teilzeiträumen vier Teilzeiträume beträgt und/oder wobei die Teilpixeldistanz gleich einer Halbpixeldistanz ist.

12. Projektionsverfahren nach einem der Ansprüche 8 bis 11, wobei zwischen jedem der Vielzahl von Teilzeiträumen Veranlassen des räumlichen Lichtmodulators, die Position eines von dem räumlichen Lichtmodulator zu projizierenden Bildes um eine Teilpixeldistanz zu verschieben das Veranlassen des räumlichen Lichtmodulators beinhaltet:
zwischen einem ersten Teilzeitraum und einem zweiten Teilzeitraum die Position eines von dem räumlichen Lichtmodulator zu projizierenden Bildes um eine Halbpixeldistanz in eine erste Richtung zu verschieben,
zwischen dem zweiten Teilzeitraum und einem dritten Teilzeitraum die Position eines von dem räumlichen Lichtmodulator zu projizierenden Bildes um eine Halbpixeldistanz in eine zweite Richtung senkrecht zu der ersten Richtung zu verschieben,
zwischen dem dritten Teilzeitraum und einem vierten Teilzeitraum die Position eines von dem räumlichen Lichtmodulator zu projizierenden Bildes um eine Halbpixeldistanz in eine dritte Richtung senkrecht zu der zweiten Richtung und der ersten Richtung entgegengesetzt zu verschieben,
nach dem vierten Teilzeitraum die Position eines von dem räumlichen Lichtmodulator zu projizierenden Bildes um eine Halbpixeldistanz in eine vierte Richtung senkrecht zu der dritten Richtung und der zweiten Richtung entgegengesetzt zu verschieben.

13. Projektionsverfahren nach einem der Ansprüche 8 bis 12, umfassend:
durch die Steuereinheit wiederholtes Veranlassen des räumlichen Lichtmodulators, ein Bild zu projizieren und die Position eines durch den räumlichen Lichtmodulator zu projizierenden Bildes für eine Vielzahl von Einzelbildern um eine Teilpixeldistanz zu verschieben.

14. Projektionsverfahren nach einem der Ansprüche 8 bis 13, wobei der räumliche Lichtmodulator eine digitale Mikrospiegelvorrichtung ist.

15. Nichtflüchtiges, computerlesbares Medium, das Anweisungen speichert, welche, wenn sie von einem elektronischen Prozessor einer Projektionsvorrichtung ausgeführt werden, die Projektionsvorrichtung veranlassen, Vorgänge auszuführen, die das Verfahren nach einem der Ansprüche 8 bis 14 umfassen.

## Revendications

1. Système de projection, comprenant :
une source de lumière (301) incluant au moins un laser configuré pour émettre une lumière laser d'entrée ;
un modulateur spatial de lumière (305) configuré pour recevoir la lumière laser d'entrée et générer une lumière laser modulée, dans lequel la lumière laser modulée comprend une pluralité d'ordres de diffraction générés par la lumière laser d'entrée diffractée par le modulateur spatial de lumière ;
une lentille (307) configurée pour effectuer une transformée de Fourier sur la lumière laser modulée et focaliser la lumière laser modulée au fur et à mesure qu'elle subit une transformée de Fourier par la lentille sur un plan de Fourier ;
un filtre (309) pour filtrer spatialement dans le plan de Fourier la lumière laser modulée au fur et à mesure qu'elle subit une transformée de Fourier par la lentille, configuré pour transmettre au moins un ordre de diffraction de la lumière laser modulée au fur et à mesure qu'elle subit une transformée de Fourier par la lentille et pour bloquer une partie restante de la lumière laser modulée au fur et à mesure qu'elle subit une transformée de Fourier par la lentille ; et
un dispositif de commande (314) pour commander le modulateur spatial de lumière, configuré pour :
pour chaque sous-période d'une pluralité de sous-périodes, amener le modulateur spatial de lumière à projeter une image à travers la lentille et le filtre, et
entre chaque sous-période de la pluralité de sous-périodes, amener le modulateur spatial de lumière à décaler la position d'une image à projeter par le modulateur spatial de lumière d'une distance de pixel partielle,
dans lequel le filtre est configuré pour transmettre au moins un ordre de diffraction zéro de la lumière laser modulée au fur et à mesure qu'elle subit une transformée de Fourier par la lentille, et
dans lequel le filtre inclut une ouverture pour laisser passer le au moins un ordre de diffraction transmis par le filtre, dans lequel une taille de l'ouverture est entre 190 % et 210 % d'une taille de l'ordre de diffraction zéro de la lumière laser modulée dans le plan de Fourier.

2. Système de projection selon la revendication 1, dans lequel la taille de l'ouverture est 200 % de la taille de l'ordre de diffraction zéro de la lumière laser modulée dans le plan de Fourier.

3. Système de projection selon l'une quelconque des revendications 1 à 2, dans lequel une forme de l'ouverture est carrée.

4. Système de projection selon l'une quelconque des revendications 1 à 3, dans lequel la pluralité de sous-périodes est de quatre sous-périodes et/ou dans lequel la distance de pixel partielle est égale à une distance d'un demi-pixel

5. Système de projection selon l'une quelconque des revendications 1 à 4, dans lequel le dispositif de commande est configuré pour amener le modulateur spatial de lumière à :
entre une première sous-période et une deuxième sous-période, décaler la position d'une image à projeter par le modulateur spatial de lumière d'une distance d'un demi-pixel dans une première direction,
entre la deuxième sous-période et une troisième sous-période, décaler la position d'une image à projeter par le modulateur spatial de lumière d'une distance d'un demi-pixel dans une deuxième direction perpendiculaire à la première direction,
entre la troisième sous-période et une quatrième sous-période, décaler la position d'une image à projeter par le modulateur spatial de lumière d'une distance d'un demi-pixel dans une troisième direction perpendiculaire à la deuxième direction et opposée à la première direction, et
après la quatrième sous-période, décaler la position d'une image à projeter par le modulateur spatial de lumière d'une distance d'un demi-pixel dans une quatrième direction perpendiculaire à la troisième direction et opposée à la deuxième direction.

6. Système de projection selon l'une quelconque des revendications 1 à 5, dans lequel le dispositif de commande est configuré pour amener de manière répétée le modulateur spatial de lumière à projeter une image et à décaler la position d'une image à projeter par le modulateur spatial de lumière d'une distance de pixel partielle pour une pluralité de trames d'image.

7. Système de projection selon l'une quelconque des revendications 1 à 6, dans lequel le modulateur spatial de lumière est un dispositif à micro-miroir numérique.

8. Procédé de projection, comprenant :
au moyen d'une source de lumière d'un système de projection incluant au moins un laser, l'émission d'une lumière laser d'entrée ;
au moyen d'un modulateur spatial de lumière du système de projection, la réception de la lumière laser d'entrée et la génération d'une lumière laser modulée, dans lequel la lumière laser modulée comprend une pluralité d'ordres de diffraction générés par la lumière laser d'entrée qui est diffractée par le modulateur spatial de lumière ;
au moyen d'une lentille du système de projection, la réalisation d'une transformée de Fourier sur la lumière laser modulée et la focalisation de la lumière laser modulée au fur et à mesure qu'elle subit une transformée de Fourier par de la lentille sur un plan de Fourier ;
au moyen d'un filtre du système de projection pour filtrer spatialement dans le plan de Fourier la lumière laser modulée au fur et à mesure qu'elle subit une transformée de Fourier par la lentille, la transmission d'au moins un ordre de diffraction de la lumière laser modulée au fur et à mesure qu'elle subit une transformée de Fourier par la lentille et le blocage d'une partie restante de la lumière modulée au fur et à mesure qu'elle subit une transformée de Fourier par la lentille ; et
au moyen d'un dispositif de commande du système de projection pour commander le modulateur spatial de lumière,
pour chaque sous-période d'une pluralité de sous-périodes, le fait amener le modulateur spatial de lumière à projeter une image à travers la lentille et le filtre ; et
entre chaque sous-période de la pluralité de sous-périodes, le fait d'amener le modulateur spatial de lumière à décaler la position d'une image à projeter par le modulateur spatial de lumière d'une distance de pixel partielle,
dans lequel la transmission d'au moins un ordre de diffraction de la lumière laser modulée au fur et à mesure qu'elle subit une transformée de Fourier par la lentille inclut la transmission d'au moins un ordre de diffraction zéro de la lumière laser modulée au fur et à mesure qu'elle subit une transformée de Fourier par la lentille, et
dans lequel le filtre inclut une ouverture pour laisser passer le au moins un ordre de diffraction transmis par le filtre, dans lequel une taille de l'ouverture est entre 190 % et 210 % d'une taille de l'ordre de diffraction zéro de la lumière laser modulée dans le plan de Fourier.

9. Procédé de projection selon la revendication 8, dans lequel la taille de l'ouverture est 200 % de la taille de l'ordre de diffraction zéro de la lumière laser modulée dans le plan de Fourier.

10. Procédé de projection selon l'une quelconque des revendications 8 à 9, dans lequel une forme de l'ouverture est carrée.

11. Procédé de projection selon l'une quelconque des revendications 8 à 10, dans lequel la pluralité de sous-périodes est de quatre sous-périodes et/ou dans lequel la distance de pixel partielle est égale à une distance d'un demi-pixel

12. Procédé de projection selon l'une quelconque des revendications 8 à 11, dans lequel, entre chaque sous-période de la pluralité de sous-périodes, le fait d'amener le modulateur spatial de lumière à décaler la position d'une image à projeter par le modulateur spatial de lumière d'une distance de pixel partielle inclut le fait d'amener le modulateur spatial de lumière à :
entre une première sous-période et une deuxième sous-période, décaler la position d'une image à projeter par le modulateur spatial de lumière d'une distance d'un demi-pixel dans une première direction,
entre la deuxième sous-période et une troisième sous-période, décaler la position d'une image à projeter par le modulateur spatial de lumière d'une distance d'un demi-pixel dans une deuxième direction perpendiculaire à la première direction,
entre la troisième sous-période et une quatrième sous-période, décaler la position d'une image à projeter par le modulateur spatial de lumière d'une distance d'un demi-pixel dans une troisième direction perpendiculaire à la deuxième direction et opposée à la première direction, et
après la quatrième sous-période, décaler la position d'une image à projeter par le modulateur spatial de lumière d'une distance d'un demi-pixel dans une quatrième direction perpendiculaire à la troisième direction et opposée à la deuxième direction.

13. Procédé selon l'une quelconque des revendications 8 à 12, comprenant :
au moyen du dispositif de commande, le fait d'amener de manière répétée le modulateur spatial de lumière à projeter une image et à décaler la position d'une image à projeter par le modulateur spatial de lumière d'une distance de pixel partielle pour une pluralité de trames d'image.

14. Procédé de projection selon l'une quelconque des revendications 8 à 13, dans lequel le modulateur spatial de lumière est un dispositif à micro-miroir numérique.

15. Support non transitoire lisible par ordinateur stockant des instructions qui, lorsqu'elles sont exécutées par un processeur électronique d'un dispositif de projection, amènent le dispositif de projection à effectuer des opérations comprenant le procédé selon l'une quelconque des revendications 8 à 14.
